# EUROPÄISCHE PATENTSCHRIFT

(11) **EP 0 585 563 B1**
(45) Veröffentlichungstag und Bekanntmachung des Hinweises auf die Patenterteilung: **13.11.1996**
(21) Anmeldenummer: 93110817.9
(22) Anmeldetag: 07.07.1993
(51) Int. Cl.: F16H 57/02, F16H 19/00

(54) **Vorrichtung zur Erzeugung von synchronen Schub-/Drehbewegungen**
Device for generating a synchronous translational/rotational movement
Dispositif pour la génération d'un mouvement synchrone de translation/rotation

(30) Priorität: 04.09.1992 DE 4229601
(43) Veröffentlichungstag der Anmeldung: 09.03.1994
(73) Patentinhaber: LEAN-TECHNIK R. JANZEN, D-45472 Mülheim a.d. Ruhr (DE)
(72) Erfinder: Janzen, Reinhard, D-45472 Mülheim an der Ruhr (DE)
(74) Vertreter: Patentanwälte Meinke, Dabringhaus und Partner

(56) Entgegenhaltungen:
- EP-A- 0 345 536
- EP-A- 0 404 006
- DE-A- 2 236 641
- DE-A- 3 732 572
- DE-C- 487 204
- GB-A- 2 116 646
- US-A- 3 400 593

## Beschreibung

Die Erfindung betrifft eine Vorrichtung zur Erzeugung von synchronen Schub-/Drehbewegungen nach dem Oberbegriff des Patentansprüchs 1.

Aus US-A-3,400,593 ist eine Vorrichtung zur Erzeugung von synchronen Schub-Drehbewegungen mit wenigstens zwei gekoppelten Schub-Dreheinheiten bekannt, die jeweils in einem zugehörigen Gehäuseteil untergebracht sind, in welchem jeweils eine Drehwelle und um 90° versetzt jeweils eine mit der jeweiligen Drehwelle in Eingriff stehende Zahn-Schubstange gelagert sind, wobei die Drehwellen der wenigstens zwei gekoppelten Schub-Dreheinheiten drehfest mit einer gemeinsamen Antriebswelle verbunden sind und die beiden Gehäuseteile lösbar aneinander befestigt sind und zusammen ein geschlossenes Gehäuse bilden. Bedingt durch die Gestaltung des Gehäuses ist dabei die Anordnung der Zahn-Schubstangen fest vorgegeben. Dies hat zur Folge, daß für unterschiedliche Hubaufgaben unterschiedliche Hubvorrichtungen bereitgehalten werden müssen.

Es sind auch seit langem gattungsähnliche Hubvorrichtungen bekannt, die ein einteiliges geschlossenes Gehäuse aufweisen, welche je nach Bauform ein oder zwei Zahn-Schubstangen aufnehmen können.

Eine solche Vorrichtung eignet sich für den Aufbau kompletter Hubsysteme, bei denen es unabhängig von der Lastverteilung auf synchrones und positioniergenaues Bewegen ankommt. Die Vorrichtungen arbeiten dabei nach dem Prinzip der Zahnstangengetriebe, sie setzen Dreh- in Linearbewegung um. Je nach Aufgabenstellung ist auch eine umgekehrte Betriebsweise möglich.

Um unterschiedliche Systemkonfigurationen zur Lösung unterschiedlicher Aufgabenstellungen realisieren zu können, sind derzeit zwei unterschiedliche Hubvorrichtungen bekannt, nämlich eine gattungsgemäße Hubvorrichtung mit einer Zahnstange, bei der die Linearbewegung horizontal oder vertikal erfolgen kann. Darüber hinaus sind als zweites Grundelement sogenannte Doppel-Hubelemente bekannt, die mit zwei um 90° versetzten Zahnstangen arbeiten, welche gleichzeitig Linearbewegungen in horizontaler und vertikaler Richtung zulassen. Der Antrieb dieser einzelnen Vorrichtungen kann je nach Aufgabenstellung drehend oder linear ausgeführt werden.

Wenn auch mit den bekannten Vorrichtungen schon eine Fülle von unterschiedlichen Systemkonfigurationen verwirklicht werden können, besteht ein Nachteil der bekannten Lösungen darin, daß beim Anwender jeweils zwei unterschiedliche Grundbauelemente bereitgehalten werden müssen, nämlich zum einen eine gattungsgemäße Vorrichtung mit einer Zahnstange und zum anderen eine zweite Ausführung mit zwei um 90° versetzt angeordneten Zahnstangen. Darüber hinaus ist bei den bekannten Vorrichtungen von Nachteil, daß bei der Ausführung mit zwei Zahnstangen die beiden Schubrichtungen auf einen Winkel von 90° zueinander festgelegt sind.

Aufgabe der Erfindung ist es daher, eine gattungsgemäße Vorrichtung so zu verbessern, daß mit dieser auf einfache Weise unterschiedlichste Hubaufgaben realisiert werden können.

Diese Aufgabe wird mit einer Vorrichtung mit den Merkmalen des Patentansprüchs 1 gelöst.

Es steht somit eine Vorrichtung zur Verfügung, die aus wenigstens zwei identischen Bauteilen, d.h. zwei identischen Schub-/Dreheinheiten besteht, welche in beliebiger Anordnung durch entsprechende Ausrichtung der beiden Gehäuse aneinander befestigt werden können, so daß es möglich ist, nicht nur, wie bei der bekannten Vorrichtung zwei um 90° versetzte Zahnschubstangen zu erreichen, vielmehr können prinzipiell die Schubstangen der beiden gekoppelten Schub-/ Dreheinheiten in beliebiger Winkelanordnung ausgerichtet werden. Es ist somit nicht erforderlich, für unterschiedliche Hubaufgaben mehrere unterschiedliche Bauteile bereitzuhalten, vielmehr können aus identischen Bauteilen (Schub-/ Dreheinheiten) eine Vielzahl unterschiedlicher Anordnungen erstellt werden.

Dabei kann es gegebenenfalls besonders vorteilhaft sein, wenn die Drehwellen der Schub-/Dreheinheiten als profilierte Hohlwellen ausgebildet sind, in welche die Antriebswelle drehfest eingreift. Diese mögliche Ausgestaltung kann einer besonders leicht zu handhabenden Anordnung dienen, nach entsprechender Befestigung der Gehäuse der beiden Schub-/Dreheinheiten läßt sich die drehfeste Verbinder Drehwellen durch einfaches Einschieben der profilierten Antriebswelle erreichen.

Vorteilhaft ist es darüber hinaus, wenn die miteinander verbundenen Gehäuse um einen gemeinsamen Zentrierring gegeneinander verdrehbar sind. Es ist dann auf einfache Weise eine exakte Ausrichtung der beiden Gehäuse und Drehwellen zueinander möglich, ohne daß es dazu einer aufwendigen Positionierung bedarf.

Zur lösbaren Verbindung der Gehäuse zweier Schub-/Dreheinheiten ist vorteilhaft vorgesehen, daß die Gehäuse mittels einer Verschraubung aneinander befestigt sind, und daß im jeweiligen Gehäuse auf einem gemeinsamen Radius um die Drehwelle eine Vielzahl von Bohrungen für die Verschraubung ausgebildet ist. Die Gehäuse der beiden zu koppelnden Schub-/Dreheinheiten können dann in die gewünschte Anordnung gegeneinander verdreht und in dieser Position durch Einfügen entsprechender Schrauben aneinander lösbar befestigt werden.

Weiterhin sieht die Erfindung vorteilhaft vor, daß das jeweilige Gehäuse zentrisch um die Führungselemente der Zahnschubstangen angeordnete Einsenkungen zur Aufnahme von Behältern für Schmierstoff aufweist. Durch diese Ausgestaltung wird die Baukastenausgestaltung der erfindungsgemäßen Vorrichtung noch verbessert, da die entsprechenden Behälter getrennt bereitgehalten werden und auf einfache Weise eingesetzt bzw. ausgetauscht werden können.

Zur Verbesserung der Funktionsfähigkeit sieht die Erfindung vorteilhaft vor, daß die Drehwellen in Wälzlagern gelagert sind. Gegenüber bekannter Gleitlagerlagerung bei derartigen Vorrichtungen läßt sich somit eine wesentlich weniger aufwendige Lagerung der Drehwellen erreichen.

Die Wartungsfreundlichkeit kann vorteilhaft dadurch erhöht werden, daß die Zahnschubstangen in Kugelbuchsen gelagert sind.

In besonders vorteilhafter Ausgestaltung der Erfindung ist vorgesehen, daß die Zahnschubstangen an beiden Kupplungsenden mit einem Gewinde versehen sind, an welches ein Kupplungsadapter anschraubbar ist. Dies hat den zusätzlichen Vorteil, daß ein Zahnstangentyp sowohl für den horizontalen als auch für den vertikalen Einsatz Verwendung finden kann. Die Zahnschubstange wird dabei lediglich durch Einschrauben der verschiedenen Adapter modifiziert. Aufgesetzte weitere Vorrichtungen können direkt mit dem oberen Ende der vertikalen Zahnschubstange verschraubt werden.

Dabei ist vorteilhaft vorgesehen, daß der Kupplungsadapter als Augenschraube ausgebildet ist. Hier kann selbstverständlich auch ein Wellenschaft vorgesehen sein oder ein anderer Adaptertyp.

Bei der Verwendung von Augenschrauben als Kupplungsadapter für die Zahnschubstange ist besonders vorteilhaft vorgesehen, daß die Augenschraube mit einer Zug-/Druck-Stange verbindbar ist, welche an beiden Kupplungsenden jeweils einen Gabelkopf aufweist und längenveränderbar ist. Mit einer solchen längenveränderbaren Zug-/Druck-Stange ist auch für unterschiedliche Abstände auf einfache Weise eine Kupplung zweier erfindungsgemäßer Vorrichtungen möglich, indem einfach ein Verbindungsbolzen zwischen die jeweilige Augenschraube und den jeweiligen Gabelkopf eingesteckt wird. Dabei ist bevorzugt das Spiel zwischen Augenschraube und Gabelkopf so gewählt, daß geringe Maßdifferenzen in allen drei Achsrichtungen, vorzugsweise unterstützt durch eine Kugelbuchse, ausgeglichen werden. Bisher übliche Verspannungen in den Zahnstangenführungen und die daraus resultierende geringe Standzeit werden somit vermieden.

Besonders bevorzugt ist es, wenn die Zug-/Druck-Stange ein Gewindestück aufweist, auf welches die Gabelköpfe aufschraubbar sind. Durch Verwendung unterschiedlich langer Gewindestücke ist dann auf einfachste Weise eine stufenlose Einstellung der Differentialkupplung möglich, wobei beispielsweise die Gewindestücke in konstruktiven Schritten von 100 mm ausgelegt sein können. Durch geeignete Ausdehnung der Gewindetiefen kann dadurch ein Einstellbereich von beispielsweise 100 mm überbrückt werden.

Die Feineinstellung durch den Monteur wird vor Ort vorgenommen. Dies wird dadurch erreicht, daß Kontermuttern am Gewindestück bzw. den Gabelköpfen gelöst werden und das jeweilige aus Augenschraube und Gabelkopf bestehende Kupplungsteilstück verdreht wird. Durch unterschiedliche Gewinde steigungen zwischen Augenschraube und Gabelkopf kann bei einer Drehung von 360° beispielsweise ein Verstellweg von 1 mm erreicht werden. Einstellungsgenauigkeiten im hundertstel Millimeterbereich sind so unproblematisch erreichbar.

Die Gesamtkonzeption der Vorrichtung bzw. des aus mehreren Vorrichtungen gebildeten Systemes ist somit als Stecksystem ausgelegt, was eine besonders schnelle und sichere sowie genaue Montage zuläßt. Die Montagezeit gegenüber bisher üblichen gebohrten und gestifteten Systemen ist um ca. 70 % geringer. Gleichzeitig wird durch schnelles Herauslösen einzelner Teile aus dem Gesamtsystem zudem ein Höchstmaß an Reparaturfreundlichkeit erreicht.

Die Erfindung ist nachstehend anhand der Zeichnung beispielsweise näher erläutert. Diese zeigt jeweils in perspektivischer Darstellung in
- Fig. 1: eine erfindungsgemäße Vorrichtung mit zwei gekoppelten Schub-/Dreheinheiten,
- Fig. 2: eine einzelne Schub-/Dreheinheit,
- Fig. 3: in Seitenansicht teilweise im Schnitt eine vorteilhafte Zahnschubstange einer erfindungsgemäßen Vorrichtung,
- Fig. 4: in Seitenansicht einen als Augenschraube ausgebildeten Kupplungsadapter für die Zahnschubstange nach Fig. 3,
- Fig. 5: einen als Wellenschaft ausgebildeten Kupplungsadapter für die Zahnschubstange nach Fig. 3 in Seitenansicht,
- Fig. 6: eine mit Zahnschubstangen mit Augenschraube gekoppelte Zug-/Druck-Stange in einer besonders vorteilhaften Ausgestaltung mit einer ersten Länge,
- Fig. 7: die Anordnung nach Fig. 6 mit einer zweiten Länge,
- Fig. 8: ein Ausführungsbeispiel eines aus erfindungsgemäßen Vorrichtungen zusammengestellten Systems in Seitenansicht und
- Fig. 9: das System nach Fig. 8 in Draufsicht.

Eine erfindungsgemäße Vorrichtung zur Erzeugung von synchronen Schub-/Drehbewegungen ist in der Zeichnung allgemein mit 1 bezeichnet. Diese Vorrichtung 1 besteht aus wenigstens zwei baugleichen, aneinander gekoppelten Schub-/Dreheinheiten 2, die jeweils ein Gehäuse 3 aufweisen.

Wie an sich bekannt, ist innerhalb jedes Gehäuses 3 der jeweiligen Schub-/Dreheinheit 2 eine Drehwelle 4 und dazu um 90° versetzt mit dieser Drehwelle in Eingriff stehend eine Zahnschubstange 5 gelagert.

Vorteilhaft sind dabei, was zeichnerisch nicht im einzelnen dargestellt ist, die Drehwellen 4 jeweils in Wälzlagern und die Zahnschubstangen 5 jeweils in Kugelbuchsen im Gehäuse 3 gelagert.

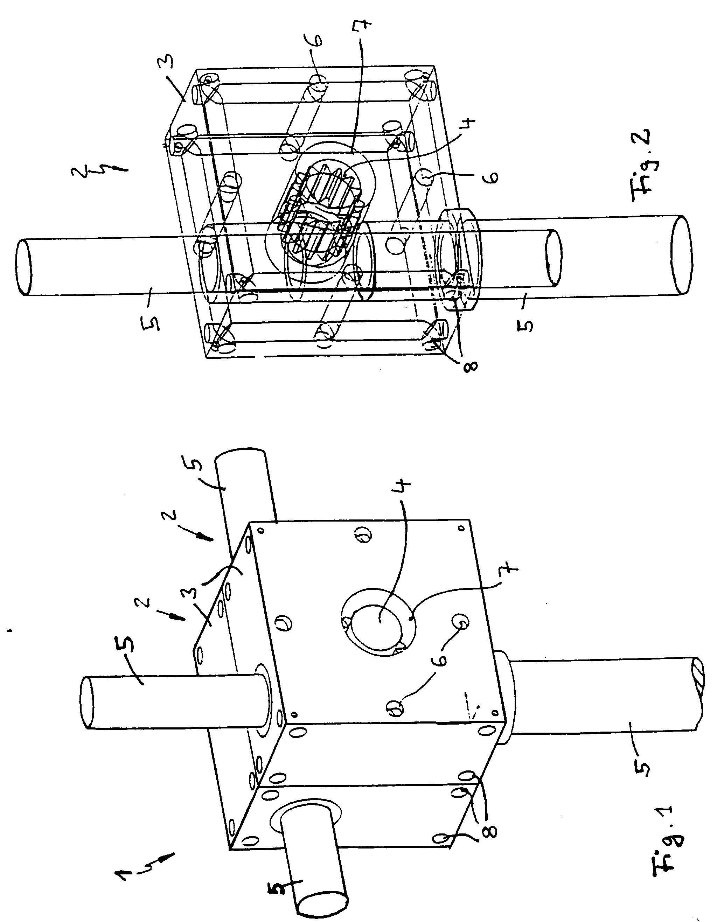

Jedes Gehäuse 3 weist parallel zur Drehwelle 4 auf einem gemeinsamen Radius eine Mehrzahl von Bohrungen 6 auf, derart, daß die beiden Gehäuse 3 zweier Schub-/Dreheinheiten 2 um die nicht dargestellte, drehfest mit den beiden Drehwellen 4 verbundene Antriebswelle als Drehachse zueinander beliebig verdreht angeordnet werden können. In Abhängigkeit von der jeweiligen Hubaufgabe ist es somit möglich, durch entsprechende Anordnung der beiden Gehäuse 2 zueinander unterschiedliche Winkelstellungen der beiden Zahnschubstangen 5 beider Schub-/Dreheinheiten 2 zu verwirklichen, d.h. es ist nicht nur die in Fig. 1 dargestellte rechtwinklige Anordnung möglich, sondern es läßt sich prinzipiell jede Winkelstellung zwischen den Zahnschubstangen 5 verwirklichen. Dabei ist für eine exakte Ausrichtung der beiden Schub-/Dreheinheiten 2 vorgesehen, daß die beiden Gehäuse 2 um einen nicht dargestellten gemeinsamen Zentrierring gegeneinander verdrehbar sind. Dieser Zentrierring kann jeweils entsprechend in die betreffende Ausnehmung 7 für die Drehwelle 4 eingesetzt werden.

Um auf besonders einfache Weise eine Kopplung und drehfeste Verbindung der Drehwellen 4 mit der Antriebswelle zu erreichen, sind die Drehwellen 4 als Hohlwellen ausgebildet, wie in Fig. 2 dargestellt. Dabei sind die Hohlwellen entsprechend mit einer Profilierung versehen, z.B. als Keilwelle ausgebildet, so daß eine entsprechend außenprofilierte Antriebswelle auf einfache Weise drehfest in die Drehwellen 4 eingreifen und diese miteinander koppeln kann.

Die Gehäuse 2 bestehen bevorzugt aus einzelnen Seitenteilen, die beispielsweise miteinander verschraubt sein können, entsprechende Bohrungen sind mit 8 angedeutet. Hier können Gußteile Verwendung finden oder es können auch entsprechende Blechformteile eingesetzt werden.

Zusätzlich kann vorgesehen sein, daß das jeweilige Gehäuse 3 zentrisch um die Führungselemente der Zahnschubstangen 5 angeordnete Einsenkungen zur Aufnahme von Behältern für Schmierstoff aufweist, was zeichnerisch nicht dargestellt ist.

Erkennbar besteht die erfindungsgemäße Vorrichtung 1 im wesentlichen nur aus baugleichen Schub-/Dreheinheiten 2, die prinzipiell in beliebiger Anzahl aneinandergereiht und gekoppelt werden können, d.h. hier können nicht nur zwei derartige Einheiten miteinander gekoppelt werden, wie dies in Fig. 1 dargestellt ist, sondern auch drei oder mehr, wobei dann durch entsprechende Anordnung der Gehäuse zueinander die Zahnschubstangen 5 in beliebiger Richtung orientiert angeordnet werden können und dergl. mehr.

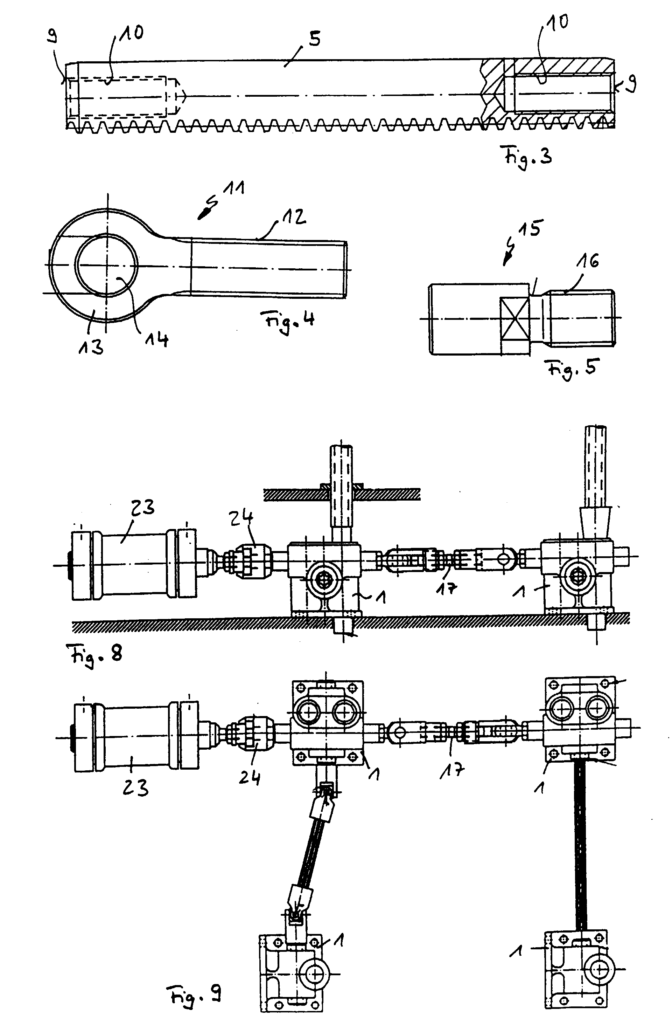

In Fig. 3 ist in besonders vorteilhafter Ausgestaltung eine Zahnschubstange 5 dargestellt. Diese Zahnschubstange 5 ist an beiden Kupplungsenden 9 jeweils mit einem Innengewinde 10 versehen, in welches ein Kupplungsadapter einschraubbar ist.

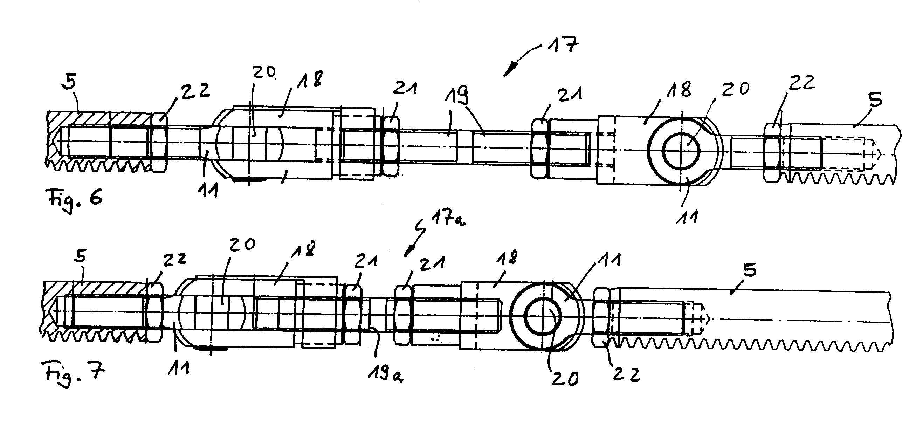

Dieser Kupplungsadapter ist gemäß Ausführungsbeispiel nach Fig. 4 vorzugsweise als Augenschraube 11 ausgebildet, welche mit einem Außengewinde 12 versehen ist und in üblicher Weise einen Kopf 13 mit einer Bohrung 14 aufweist.

Alternativ kann gemäß dem Ausführungsbeispiel nach Fig. 5 der Kupplungsadapter auch als Wellenschaft 15 ausgebildet sein, das Einschraubgewinde ist hier mit 16 bezeichnet.

Erkennbar bietet die Ausgestaltung der Zahnschubstange 5 gemäß Fig. 3 den Vorteil, daß unterschiedliche Kupplungsadapter stirnseitig angebracht werden können oder auch weitere Vorrichtungen.

Bei der Ausgestaltung des Kupplungsadapters als Augenschraube 11 gemäß Fig. 4 in Verbindung mit der Zahnschubstange nach Fig. 3 ist vorteilhaft auch eine Zug-/Druck-Stange 17 vorgesehen, die in Fig. 6 bzw. 7 dargestellt ist.

Bei der Ausführungsform nach Fig. 6 weist die Zug-/Druck-Stange 17 an beiden Kupplungsenden jeweils einen Gabelkopf 18 auf, wobei beide Gabelköpfe 18 endseitig auf ein zwischen dieses befindliches Gewindestück 19 aufschraubbar sind. Die Gabelköpfe 18 sind dabei selbstverständlich so ausgelegt, daß sie verbindend mit den Augenschrauben 11 bzw. deren Köpfen 13 zusammenwirken, d.h. mit einem Verbindungsbolzen 20 gekoppelt werden können.

Durch unterschiedliche Längenauswahl der Gewindestücke 17 bzw. 17a (Fig. 7) können auf einfache Weise unterschiedlich lange Zug-/Druck-Stangen 17 bzw. 17a erstellt werden. Dabei sind zusätzlich sowohl an den Gewindestücken 19 als auch an den Gewinden 12 der Augenschrauben 11 Kontermuttern 21 bzw. 22 vorgesehen, mittels derer eine exakte Längeneinstellung möglich ist.

Um eine stufenlose Einstellung der Differentialkupplung in allen Längen zu gewährleisten, werden die Gewindestücke 19 vorzugsweise in konstruktiven Schritten von 100 mm ausgelegt. Durch die Auslegung der Gewindetiefen kann dazu ein Einstellbereich von 100 mm überbrückt werden. Es ist so beispielsweise möglich, dem Anwender ein Kupplungsstück in einem Einstellbereich von 280 bis 1480 mm stufenlos zur Verfügung zu stellen. Dabei werden die Kupplungsstücke bevorzugt voreingestellt geliefert.

Die Feineinstellung durch den Monteur vor Ort wird dadurch erreicht, daß die Kontermuttern 21,22 gelöst werden und das jeweils aus Augenschraube 11 und Gabelkopf 18 bestehende Kupplungsteilstück verdreht wird.

Durch unterschiedliche Gewindesteigungen zwischen Augenschraube 11 (vorzugsweise M20x2) und Kabelkopf (vorzugsweise M20x1,5) wird beispielsweise bei einer Drehung von 360° ein Verstellweg von 1 mm erreicht (Linksdrehung + 1 mm, Rechtsdrehung - 1 mm). Dadurch sind Einstellungsgenauigkeiten im hundertstel Millimeterbereich problemlos möglich.

Erkennbar ist das Gesamtsystem als Stecksystem ausgelegt, was eine schnelle und sichere sowie genaue Montage ermöglicht. Außerdem ist durch ein schnelles Herauslösen einzelner Teile aus dem Gesamtsystem ein Höchstmaß an Reparaturfreundlichkeit gegeben.

In den Fig. 8 und 9 ist beispielsweise ein aus mehreren Vorrichtungen 1 zusammengestelltes Gesamtsystem gezeigt, welches von einem Pneumatik-Zylinder 23 angetrieben wird, welcher über eine Kupplungsverbindung 24 an die Drehwelle 4 einer ersten erfindungsgemäßen Vorrichtung 1 angeschlossen ist.

Natürlich ist die Erfindung nicht auf die dargestellten Ausführungsbeispiele beschränkt. Weitere Ausgestaltungen sind möglich, ohne den Grundgedanken zu verlassen. So lassen sich mit den erfindungsgemäßen Vorrichtungen 1 eine Vielzahl unterschiedlicher Hubsysteme erstellen.

## Patentansprüche

1. Vorrichtung zur Erzeugung von synchronen Schub-/Drehbewegungen mit wenigstens zwei gekoppelten Schub-/Dreheinheiten (2), die jeweils in einem zugehörigen Gehäuseteil untergebracht sind, in welchem jeweils eine Drehwelle (4) und um 90° versetzt jeweils eine mit der jeweiligen Drehwelle in Eingriff stehende Zahnschubstange (5) gelagert sind, wobei die Drehwellen (4) der wenigstens zwei gekoppelten Schub-/Dreheinheiten (2) drehfest mit einer gemeinsamen Antriebswelle verbunden sind und die beiden Gehäuseteile lösbar aneinander befestigt sind,
dadurch gekennzeichnet,
daß die Gehäuseteile der wenigstens zwei Schub-/Dreheinheiten (2) jeweils als geschlossenes eigenständiges Gehäuse (3) ausgebildet sind und beide Gehäuse (3) außenseitig mit korrespondierenden Befestigungsmitteln zum Aneinanderbefestigen der Gehäuse (3) in beliebigen Winkelstellungen um die Antriebswelle als Drehachse versehen sind.

2. Vorrichtung nach Anspruch 1,
dadurch gekennzeichnet,
daß die miteinander verbundenen Gehäuse (3) um einen gemeinsamen Zentrierring gegeneinander verdrehbar sind.

3. Vorrichtung nach Anspruch 1 oder 2,
dadurch gekennzeichnet,
daß die Gehäuse (3) mittels einer Verschraubung aneinander befestigt sind und daß im jeweiligen Gehäuse (3) auf einem gemeinsamen Radius um die Drehwelle (4) eine Vielzahl von Bohrungen (6) für die Verschraubung ausgebildet ist.

4. Vorrichtung nach Anspruch 1 oder einem der folgenden,
dadurch gekennzeichnet,
daß das jeweilige Gehäuse (3) zentrisch um die Führungselemente der Zahnschubstangen (5) angeordnete Einsenkungen zur Aufnahme von Behältern für Schmierstoff aufweist.

5. Vorrichtung nach Anspruch 1 oder einem der folgenden,
dadurch gekennzeichnet,
daß die Drehwellen (4) in Wälzlagern gelagert sind.

6. Vorrichtung nach Anspruch 1 oder einem der folgenden,
dadurch gekennzeichnet,
daß die Zahnschubstangen (5) in Kugelbuchsen gelagert sind.

7. Vorrichtung nach Anspruch 1 oder einem der folgenden,
dadurch gekennzeichnet,
daß die Zahnschubstangen (5) an beiden Kupplungsenden (9) mit einem Gewinde (10) versehen sind, an welches ein Kupplungsadapter (11,15) anschraubbar ist.

8. Vorrichtung nach Anspruch 7,
dadurch gekennzeichnet,
daß der Kupplungsadapter als Augenschraube (11) ausgebildet ist.

9. Vorrichtung nach Anspruch 8,
dadurch gekennzeichnet,
daß die Augenschraube (11) mit einer Zug-/Druck-Stange (17) verbindbar ist, welche an beiden Kupplungsenden jeweils einen Gabelkopf (18) aufweist und längenveränderbar ist.

10. Vorrichtung nach Anspruch 1 oder einem der folgenden,
dadurch gekennzeichnet,
daß die Zug-/Druck-Stange (17) ein Gewindestück (19) aufweist, auf welches die Gabelköpfe (18) aufschraubbar sind.

## Claims

1. Apparatus for producing synchronous thrust/rotary movements comprising at least two coupled thrust/rotary units (2) which are each disposed in a respective associated housing portion in each of which are mounted a respective rotary shaft (4) and displaced through 90° a respective thrust rack (5) which is in engagement with the respective rotary shaft, wherein the rotary shafts (4) of the at least two coupled thrust/rotary units (2) are non-rotatably connected to a common drive shaft and the two housing portions are releasably fixed to each other, characterised in that the housing portions of the at least two thrust/rotary units (2) are each in the form of a respective closed independent housing (3) and the two housings (3) are provided on the outside with corresponding fixing means for fixing the housings (3) together in any angular positions about the drive shaft as the axis of rotation.

2. Apparatus according to claim 1 characterised in that the housings (3) which are connected together are rotatable relative to each other about a common centering ring.

3. Apparatus according to claim 1 or claim 2 characterised in that the housings (3) are fixed to each other by way of a screw means and that a plurality of bores (6) for the screw means are provided in the respective housing (3) on a common radius about the rotary shaft (4).

4. Apparatus according to claim 1 or one of the following claims characterised in that the respective housing (3) has recesses arranged concentrically around the guide elements of the thrust racks (5), for receiving containers for lubricant.

5. Apparatus according to claim 1 or one of the following claims characterised in that the rotary shafts (4) are supported in rolling bearings.

6. Apparatus according to claim 1 or one of the following claims characterised in that the thrust racks (5) are supported in ball bearing sleeves.

7. Apparatus according to claim 1 or one of the following claims characterised in that the thrust racks (5) are provided at both coupling ends (9) with a screwthread (10) on to which a coupling adaptor (11, 15) can be screwed.

8. Apparatus according to claim 7 characterised in that the coupling adaptor is in the form of an eye bolt (11).

9. Apparatus according to claim 8 characterised in that the eye bolt (11) can be connected to a pull-push rod (17) which has a fork head (18) at each of its two coupling ends and which is variable in length.

10. Apparatus according to claim 1 or one of the following claims characterised in that the pull-push rod (17) has a screwthread portion (19) on to which the fork heads (18) can be screwed.

## Revendications

1. Dispositif pour produire des mouvements synchrones de translation/rotation comportant au moins deux unités couplées de translation/rotation (2), qui sont logées chacune dans un élément de boîtier associé et dans lequel sont montés respectivement un arbre rotatif (4) et, dans une position décalée de 90°, respectivement une crémaillère (5) qui engrène avec l'arbre rotatif respectif, et dans lequel les arbres rotatifs (4) des au moins deux unités couplées de translation/rotation (2) sont reliées solidairement en rotation à un arbre d'entraînement commun, et les deux éléments de boîtier sont fixés l'un à l'autre de façon amovible, caractérisé en ce que les éléments de boîtier des au moins deux unités de translation/rotation (2) sont agencés chacun sous la forme d'un boîtier indépendant fermé (3), et les deux boîtiers sont pourvus extérieurement de moyens de fixation correspondants pour la fixation réciproque des boîtiers (3) dans des positions angulaires quelconques autour de l'arbre d'entraînement en tant qu'axe de rotation.

2. Dispositif selon la revendication 1, caractérisé en ce que les boîtiers (3), qui sont reliés entre eux, peuvent tourner l'un par rapport à l'autre autour d'une bague de centrage commune.

3. Dispositif selon la revendication 1 ou 2, caractérisé en ce que les boîtiers (3) sont vissés l'un à l'autre au moyen d'un système de vissage et qu'une multiplicité de perçages (6) pour le système de vissage sont formés dans le boîtier respectif (3) en étant situés à une même distance autour de l'arbre rotatif (4).

4. Dispositif selon la revendication 1 ou l'une des suivantes, caractérisé en ce que le boîtier respectif (3) comporte des renfoncements, qui sont disposés d'une manière centrée autour des éléments de guidage des crémaillères (5) et servent à loger des récipients pour un lubrifiant.

5. Dispositif selon la revendication 1 ou l'une des suivantes, caractérisé en ce que les arbres rotatifs (4) sont tourillonnés dans des roulements.

6. Dispositif selon la revendication 1 ou l'une des suivantes, caractérisé en ce que les crémaillères (5) sont montées dans des coussinets à billes.

7. Dispositif selon la revendication 1 ou l'une des suivantes, caractérisé en ce que les crémaillères (5) comportent, au niveau des deux extrémités d'accouplement (9), un filetage (10), sur lequel peut être vissé un adaptateur d'accouplement (11,15).

8. Dispositif selon la revendication 7, caractérisé en ce que l'adaptateur d'accouplement est agencé sous la forme d'un boulon à oeillet (11).

9. Dispositif selon la revendication 8, caractérisé en ce que le boulon à oeillet (11) peut être relié à une tige de traction/compression (17), qui possède respectivement une tête en forme de fourche (18) au niveau des deux extrémités d'accouplement et dont la longueur est variable.

10. Dispositif selon la revendication 1 ou l'une des suivantes, caractérisé en ce que la tige de traction/poussée (17) comporte un élément fileté (19), sur lequel peuvent être vissées les têtes en forme de fourche (18).
